(19) Europäisches Patentamt / European Patent Office / Office européen des brevets

(11) **EP 3 083 274 B1**

(12) **EUROPEAN PATENT SPECIFICATION**

(45) Date of publication and mention
of the grant of the patent:
**06.02.2019 Bulletin 2019/06**

(21) Application number: **14815310.9**

(22) Date of filing: **15.12.2014**

(51) Int Cl.:
*B60C 1/00* *(2006.01)*    *B60C 11/11* *(2006.01)*
*B60C 11/03* *(2006.01)*    *B60C 11/00* *(2006.01)*
*B60C 11/12* *(2006.01)*    *B60C 11/13* *(2006.01)*

(86) International application number:
**PCT/EP2014/077713**

(87) International publication number:
**WO 2015/091332 (25.06.2015 Gazette 2015/25)**

(54) **TREAD BAND COMPRISING CURVED BLOCKS WITH COVERING MATERIAL**

LAUFFLÄCHE MIT GEKRÜMMTEN BLÖCKEN MIT ÜBERZUGSMATERIAL

BANDE DE ROULEMENT COMPRENANT DES PAVÉS COURBES AVEC MATIÈRE DE COUVERTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2013 FR 1362800**

(43) Date of publication of application:
**26.10.2016 Bulletin 2016/43**

(73) Proprietor: **Compagnie Générale des
Etablissements Michelin
63000 Clermont-Ferrand (FR)**

(72) Inventor: **KANEKO, Shuichi
Tokyo 163-1073 (JP)**

(74) Representative: **Regimbeau
20, rue de Chazelles
75847 Paris Cedex 17 (FR)**

(56) References cited:
**WO-A1-2013/092688      JP-A- H02 246 808
US-A- 1 127 517          US-A- 4 057 089
US-A1- 2003 205 305      US-A1- 2007 017 618
US-A1- 2007 221 304      US-B1- 6 591 879**

## Description

### FIELD OF THE INVENTION

The present invention relates to a tread band for a pneumatic tyre suitable for ice-bound or snow covered roads, and more particularly to a tread band comprising a plurality of curved blocks.

### PRIOR ART

Document US4057089 discloses a pneumatic tyre comprising a tread band. The tread band has a plurality of blocks. Each block extends in a curved manner to one side of the tread band towards the centre of this tread band. These curved blocks are defined by main grooves. These main grooves are able to drain water outside the tread band when the pneumatic tyre is rolling on wet road. The curved blocks are here connected together via a large circumferential block which maintains the resistance of the different curved blocks in the tread band, limiting the risks of tearing of the rubber.

Reference is also made to WO 2013/092688 A1 and JP H02 246808 A, which disclose further variants of tread bands for pneumatic tyres.

It is an object of the present invention to improve the adherence on a wet road of a tread band comprising a plurality of curved blocks and in the same time maintaining or improving the lifetime of this tread band.

### DEFINITIONS

"Tyre" is understood as any type of elastic tyre whether it is subjected to an internal pressure or not.

"Tread" of a tyre is understood as a quantity of rubber material defined by lateral surfaces and by two principal surfaces, one thereof being designed to come into contact with a road surface when the tyre is travelling.

"Block" is understood as relief element limited by some grooves. Each block comprises a plurality of lateral faces and a contact face which is able to come into contact with the road when the tyre is rolling.

"Side of the tread band" is understood as the place in the pneumatic tyre where a transition of the tread band with a side of the pneumatic tyre occurs.

"Groove" is understood as a cut-out, the material faces thereof not coming into contact in normal travelling conditions. Generally, the width of a groove is greater than or equal to 2 mm.

"Sipe" is understood as a cut-out, the material faces thereof coming into contact during normal travelling conditions. Generally, the width of a sipe is less than 2 mm.

### SUMMARY OF THE INVENTION

The invention relates to a tread band set forth in claim 1 and claims dependent thereon.

The description also discloses a tread band made of rubber-like material for a tyre according to one aspect. The tread band comprises two sides with a predetermined distance D between these two sides and a centre. The tread band having a plurality of blocks, each block extending continuously in a curved manner to one side of the tread band towards the centre of this tread band, the block following a certain curvature C. Each block comprises at least one lateral face, this lateral face is covered totally by a covering material. The covering material has a modulus of elasticity which is greater than the modulus of elasticity of the rubber-like material forming the block.

According to the above aspect, the tread band is not provided with a central circumferential block. Thus, the ability of the tread band to drain water outside this tread band is improved. By using a covering material on the lateral faces of the blocks, it is possible to increase the stiffness of these blocks, thus compensating the lack of a central circumferential block in the tread band.

In a variant, the covering material comprises an elastomeric material of which the dynamic shear modulus $G^*$ subjected to a maximum alternating stress of 0.7 MPa, at a frequency of 10 Hz and at a temperature of -10°C, is greater than 200 MPa and preferably greater than 300 MPa.

By using a covering material with such features, we improve the ability of the block to scrap the snow on the road. Consequently, the adherence on a snow road is improved.

In a variant, the covering material comprises an assembly of fibers.

By using fibers, we improve the resistance of the covering material.

In a variant, all or part of the blocks of the plurality of blocks comprising a main sipe extending in the block and following the same curvature C, this main sipe separating the block in two ½ parts.

By using a covering material, in one hand the rigidity of the block is improved but in the second hand, the mechanical resistance of the block to the wear could be less important. By using a main sipe extending in the block, we compensate the increasing of the rigidity due to the cover material. Indeed, we create added edges on the block to improve the scraping of the tread band on the snow.

In a variant, the block comprises a plurality of secondary sipes, each secondary sipe extending perpendicularly to the main sipe.

We more decrease the rigidity of the block. Indeed, we create added edges to improve the scraping of the tread band on the snow.

In a variant, the pitch between the plurality of secondary sipes is globally equal along the main sipe.

The uniformity in the wear of the block is improved.

In a variant, each block having lateral walls, the secondary sipes do not extend until one of the lateral walls of the block.

We avoid the propagation of cracks inside the block.

In a variant, the main sipe having a depth of main sipe and the secondary sipes having the depth of secondary sipes, the depth of the secondary sipes is different than the depth of the main sipe.

Thus it is possible to adjust more precisely the rigidity in the block.

BRIEF DESCRIPTION OF THE DRAWINGS

Other features and advantages of the invention will emerge from the following description, given by way of nonlimiting example, with reference to the attached drawings in which:

- **Figure 1** schematically depicts a part of a tread band according to the invention;
- **Figure 2** schematically depicts a block of the tread band of **Figure 1** according to a second embodiment of the invention;
- **Figure 3** schematically depicts a block of the tread band of **Figure 1** according to a third embodiment of the invention.

In the description that follows, elements that are substantially identical or similar will be denoted by identical references.

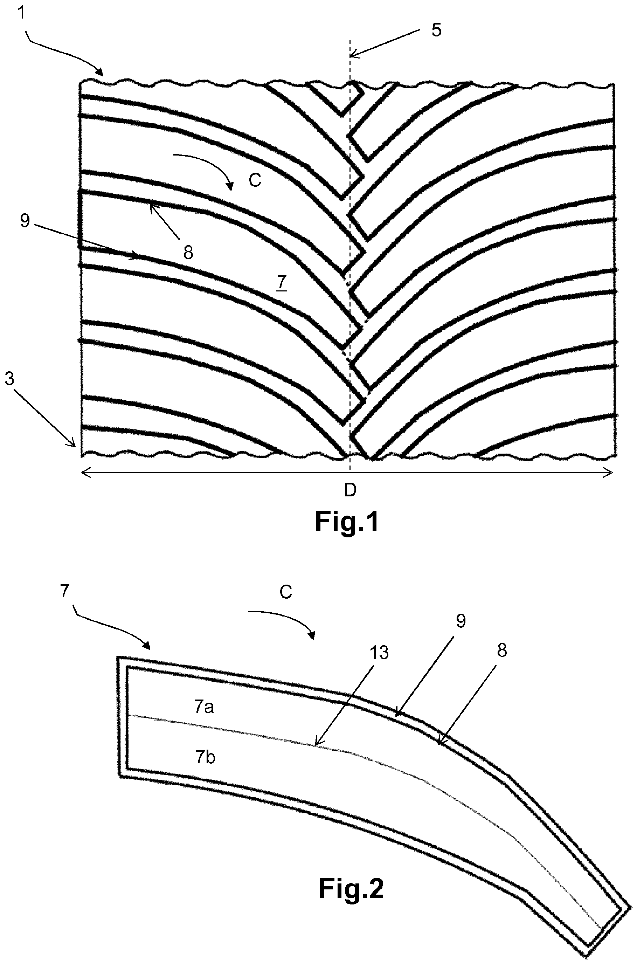

**Figure 1** depicts a tread band 1 made of rubber-like material for a tyre. The tread band 1 comprises two sides 3 and a centre 5. The distance D between the two sides 3 of the tread band is disclosed by the European Tyre and Rim Technical Organisation (ETRTO). The ETRTO defines this distance D such as $D=(1.075-0.005ar)\,{}^*S^{1.001}$, where ar is the Nominal aspect ratio and S is the Design Section Width on Measuring Rim. The tread band has a plurality of blocks 7 defined by main grooves. Each block extends continuously in a curved manner to one side 3 of the tread band towards the centre 5 of this tread band, the block following a certain curvature C. By "continuously", it is understood that no secondary groove opening into the main grooves separate the block in different parts. With no secondary groove opening into the main grooves, the evacuation of the water outside this tread band, via the main grooves, is not disturbed. By "towards the centre", it is understood that the block stops at the level of the centre, or just before the centre or just after the centre. The centre means a line extending in a circumferential direction and dividing the tread band in two equally parts of the tread bands. The blocks are here not connected together in the centre of the tread band.

Each block comprises lateral faces 8, the lateral faces being covered totally by a covering material 9. This covering material has a modulus of elasticity which is greater than the modulus of elasticity of the rubber-like material forming the block 7.

More particularly, the covering material comprises an elastomeric material of which the dynamic shear modulus G* subjected to a maximum alternating stress of 0.7 MPa, at a frequency of 10 Hz and at a temperature of -10°C, is greater than 200 MPa and preferably greater than 300 MPa. In the present document, the terms "modulus of elasticity G'" and "modulus of viscosity G''" denote the dynamic properties well known to the person skilled in the art. Said properties are measured on a Metravib VA4000 viscoanalyser on test specimens moulded from raw compositions. Test specimens such as those described in the ASTM D 5992-96 standard (version published September 2006, initially approved in 1996) in the figure X2.1 (circular embodiment) are used. The diameter of the test specimen is 10 mm (thus it has a circular section of 78.5 $mm^2$), the thickness of each of the portions of rubber-like composition is 2 mm, which provides a "diameter to thickness" ratio of 5 (in contrast to the ISO 2856 standard, cited in the ASTM standard, paragraph X2.4 which recommends a d/t value of 2). The response of a test specimen of a vulcanized rubber-like composition subjected to simple alternating sinusoidal shear stress, at a frequency of 10 Hz, is recorded. The test specimen is subjected to sinusoidal shear stress at 10 Hz, at controlled stress (0.7 MPa) symmetrically around its position of equilibrium. The measurement is carried out during a temperature ramp increasing by 1.5°C per minute, from a temperature Tmin lower than the glass transition temperature (Tg) of the material, up to a temperature Tmax which may correspond to the rubber plateau of the material. Before starting the scanning, the test specimen is stabilized at the temperature Tmin for 20 minutes to reach a uniform temperature within the test specimen. The result used is the dynamic shear modulus of elasticity (G') and the shear modulus of viscosity (G'') at the selected temperatures (in this case 0°, 5° and 20°C). The "complex modulus" G* is defined as the absolute value of the complex sum of the modulus of elasticity G' and the modulus of viscosity G'':

$$G^* = \sqrt{(G'^2 + G''^2)}\ .$$

In a variant, the elastomeric material of the covering layer comprises a composition based on at least one diene elastomer which is very highly laden with sulphur, such as ebonite.

In a variant, the covering material comprises an assembly of fibers, for example a three-dimensional assembly of fibres forming a felt. The fibres of said felt may be selected from the group of textile fibres and mineral fibres and a mixture thereof. It is also noteworthy that the fibres of said felt may be selected from textile fibres of natural origin, for example from the group of silk, cotton, bamboo, cellulose, wool fibres and mixtures thereof.

In a further variant, the elastomeric material of the covering layer comprises a composition based on at least one thermoplastic polymer, such as polyethylene terephthalate (PET). Such a polymer may have a Young's modulus of more than 1 GPa.

**Figure 2** depicts a block of the tread band according to a second embodiment of the invention. In this embodiment, all of the blocks 7 comprise a main sipe 13 extending in the block and following the curvature C. The main sipe separates the block in two ½ parts 7a 7b, this two ½ parts 7a, 7b being globally the same. In a variant, only a part of the blocks 7 comprises the main sipe 13.

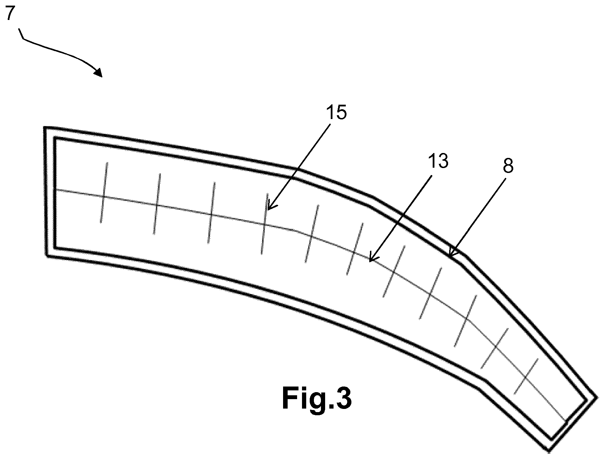

**Figure 3** depicts a third embodiment in which the block comprises a plurality of secondary sipes 15, each secondary sipe extending perpendicularly to the main sipe 13. The depth of the secondary sipes 15 is globally equal to the depth of the main sipe 13. In a variant, the depth of the secondary sipes is different than the depth of the main sipe. For example, the depth of the secondary sipes is lower than the depth of the main sipe. All the combinations of depth between the main sipe and the secondary sipes are possible.

Indeed, the pitch between the plurality of secondary sipes 15 is globally equal along the main sipe 13.

In addition, the secondary sipes 15 do not extend until one of the lateral walls 8 of the block (7).

The invention is not restricted to the examples described and depicted and various modifications can be made thereto without departing from its scope, which is defined by the appended claims.

## Claims

1. Tread band made of rubber-like material for a tyre, said tread band (1) comprising two sides (3) axially distant with a predetermined distance D and a centre (5), said tread band having a plurality of blocks (7), **characterized in that** each block extends continuously in a curved manner to one side (3) of the tread band towards the centre (5) of this tread band so as not to form a central circumferential block around the centre (5), the block following a certain curvature C, each block (7) comprising at least one lateral face (8), and **in that** this lateral face is covered totally by a covering material (9), the covering material (9) having a modulus of elasticity which is greater than the modulus of elasticity of the rubber-like material forming the block (7).

2. Tread band according to Claim 1, **characterized in that** the covering material (9) comprises an elastomeric material of which the dynamic shear modulus G* subjected to a maximum alternating stress of 0.7 MPa, at a frequency of 10 Hz and at a temperature of -10°C, is greater than 200 MPa and preferably greater than 300 MPa.

3. Tread band according to either of Claims 1 or 2, **characterized in that** the covering material (9) comprises an assembly of fibers.

4. Tread band according to any one of Claims 1 to 3, **characterized in that** all or part of the blocks (7) of the plurality of blocks comprise a main sipe (13) extending in the block (7) and following the same curvature C, this main sipe (13) separating the block in two ½ parts (7a, 7b).

5. Tread band according to Claim 4, **characterized in that** the block comprises a plurality of secondary sipes (15), each secondary sipe extending perpendicularly to the main sipe (13).

6. Tread band according to Claim 5, the pitch (P) between the plurality of secondary sipes (15) is globally equal along the main sipe (13).

7. Tread band according to Claim 5 or 6, **characterized in that** the secondary sipes (15) do not extend until one of the lateral face (8) of the block (7).

8. Tread band according to any one of Claims 5 to 7, in which the main sipe has a depth of main sipe and the secondary sipes have the depth of secondary sipes, **characterized in that** the depth of the secondary sipes is different than the depth of the main sipe.

## Patentansprüche

1. Laufstreifen aus gummiartigem Material für einen Reifen, wobei der Laufstreifen (1) zwei axial beabstandeten Seiten (3) mit einem vorbestimmten Abstand D und einer Mitte (5) aufweist, wobei der Laufstreifen mehrere Blöcke (7) aufweist, **dadurch gekennzeichnet, dass** jeder Block kontinuierlich sich zu einer Seite (3) des Laufstreifens in gekrümmter Weise zur Mitte (5) dieses Laufstreifens hin erstreckt, so dass kein mittiger umfänglicher Block um die Mitte (5) gebildet wird, wobei der Block einer bestimmten Krümmung C folgt, jeder Block (7) mindestens eine Seitenfläche (8) aufweist, und dass diese Seitenfläche vollständig mit einem Abdeckmaterial (9) bedeckt ist, wobei das Abdeckmaterial (9) einen Elastizitätsmodul hat, der größer ist als der Elastizitätsmodul des gummiartigen Materials, das den Block (7) bildet.

2. Laufstreifen nach Anspruch 1, **dadurch gekennzeichnet, dass** das Abdeckmaterial (9) ein elastomeres Material umfasst, dessen dynamischer Schermodul G*, wenn einer maximalen Wechselbeanspruchung von 0,7 MPa bei einer Frequenz von 10 Hz und einer Temperatur von -10 °C ausgesetzt, größer als 200 MPa und vorzugsweise größer als 300 MPa ist.

3. Laufstreifen nach entweder Anspruch 1 oder 2, **da-**

**durch gekennzeichnet, dass** das Abdeckmaterial (9) einen Satz von Fasern enthält.

4. Laufstreifen nach einem der Ansprüche 1 bis 3, **dadurch gekennzeichnet, dass** alle oder ein Teil der Blöcke (7) von den mehreren Blöcken eine Hauptlamelle (13) aufweisen, die sich in den Block (7) erstreckt und der gleichen Krümmung C folgt, wobei diese Hauptlamelle (13) den Block in zwei halbe Teile (7a, 7b) unterteilt.

5. Laufstreifen nach Anspruch 4, **dadurch gekennzeichnet, dass** der Block mehrere Sekundärlamellen (15) aufweist, wobei jede Sekundärlamelle sich rechtwinklig zur Hauptlamelle (13) erstreckt.

6. Laufstreifen nach Anspruch 5, wobei die Teilung (P) zwischen den mehreren Sekundärlamellen (15) allgemein gleich entlang der Hauptlamelle (13) ist.

7. Laufstreifen nach Anspruch 5 oder 6, **dadurch gekennzeichnet, dass** sich die Sekundärlamellen (15) nicht bis zu einer der Seitenflächen (8) des Blocks (7) erstreckt.

8. Laufstreifen nach einem der Ansprüche 5 bis 7, wobei die Hauptlamelle eine Hauptlamellen-Tiefe und die Sekundärlamellen eine Sekundärlamellen-Tiefe aufweisen, **dadurch gekennzeichnet, dass** die Sekundärlamellen-Tiefe sich von der Hauptlamellen-Tiefe unterscheidet.

## Revendications

1. Bande de roulement réalisée en matière type caoutchouc pour pneu, ladite bande de roulement (1) comprenant deux côtés (3) distants axialement d'une distance prédéterminée D et un centre (5), ladite bande de roulement ayant une pluralité de pavés (7), **caractérisée en ce que** chaque pavé s'étend en continu de manière courbe d'un côté (3) de la bande de roulement vers le centre (5) de cette bande de roulement, de manière à ne pas former un pavé circonférentiel central autour du centre (5), le pavé suivant une certaine courbure C, chaque pavé (7) comprenant au moins une face latérale (8), et **en ce que** cette face latérale est couverte en totalité par une matière de couverture (9), la matière de couverture (9) ayant un module d'élasticité qui est supérieur au module d'élasticité de la matière type caoutchouc constituant le pavé (7).

2. Bande de roulement selon la revendication 1, **caractérisée en ce que** la matière de couverture (9) comprend une matière élastomère dont le module en cisaillement dynamique G* soumis à une contrainte alternée maximale de 0,7 MPa, à une fréquence de 10 Hz et à une température de -10 °C, est supérieur à 200 MPa et de préférence supérieur à 300 MPa.

3. Bande de roulement selon l'une ou l'autre des revendications 1 ou 2, **caractérisée en ce que** la matière de couverture (9) comprend un ensemble de fibres.

4. Bande de roulement selon l'une quelconque des revendications 1 à 3, **caractérisée en ce que** tout ou une partie des pavés (7) de la pluralité de pavés comprennent une lamelle principale (13) s'étendant dans le pavé (7) et suivant la même courbure C, cette lamelle principale (13) séparant le pavé en deux moitiés (7a, 7b).

5. Bande de roulement selon la revendication 4, **caractérisée en ce que** le pavé comprend une pluralité de lamelles secondaires (15), chaque lamelle secondaire s'étendant perpendiculairement à la lamelle principale (13) .

6. Bande de roulement selon la revendication 5, dans laquelle l'espacement (P) entre la pluralité de lamelles secondaires (15) est globalement le même tout le long de la lamelle principale (13).

7. Bande de roulement selon la revendication 5 ou 6, **caractérisée en ce que** les lamelles secondaires (15) ne s'étendent pas jusqu'à l'une des faces latérales (8) du pavé (7).

8. Bande de roulement selon l'une quelconque des revendications 5 à 7, dans laquelle la lamelle principale a une profondeur de lamelle principale et les lamelles secondaires ont la profondeur de lamelles secondaires, **caractérisée en ce que** la profondeur des lamelles secondaires est différente de la profondeur de la lamelle principale.

**Fig.1**

**Fig.2**

**Fig.3**

**EP 3 083 274 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4057089 A
- WO 2013092688 A1
- JP H02246808 A